# EUROPEAN PATENT APPLICATION

(11) **EP 3 112 999 A1**
(43) Date of publication of application: **04.01.2017**
(21) Application number: 15754466.9
(22) Date of filing: 20.02.2015
(51) Int. Cl.: G06F 3/048

(54) **DISPLAY APPARATUS AND DISPLAY METHOD**

(30) Priority: 25.02.2014 JP 2014034373
(71) Applicant: NTT DOCOMO, INC., Chiyoda-ku Tokyo 100-6150 (JP)
(72) Inventor: KAWAMURA, Satoru, Tokyo 100-6150 (JP); OOMIYA, Takashi, Tokyo 100-6150 (JP); ANDO, Tomohiro, Tokyo 100-6150 (JP); ICHINOSE, Akihiro, Tokyo 100-6150 (JP); NAGATA, Masami, Tokyo 100-6150 (JP)
(74) Representative: Hoffmann Eitle
(86) International application number: PCT/JP2015/054862
(87) International publication number: WO 2015/129587

(57) **Abstract**

Acquiring means 103 acquires relevant information (for example, information indicative of an amount of processing that has been performed relative to the content based on a user's operation) relevant to content. Selecting means 104 selects one or more content from among a plurality of content corresponding to a plurality of items of display information displayed on first display means 101, based on relevant information acquired by acquiring means 103 for each of the plurality of content. Display control means 105 causes second display means 102 to display the one or more content selected by selecting means 104.

## Description

### Technical Field

The present invention relates to a technique for displaying content.

### Background Art

There is known in the art a technique for displaying content. For example, Patent Document 1 discloses a technique for displaying a webpage on a second display, the webpage being accessible via a link specified by a user on a first display.

### Prior Art Document

### Patent Document

Patent Document 1: JP 2011-215909 A1

### Summary of the Invention

### Problems to be solved by the Invention

A display apparatus that is equipped with two display means is convenient to use. For example, the invention disclosed in Patent Document 1 is convenient, in that it is configured to cause a first display means to display information (hereinafter, "display information," for example, a hyperlink), and at the same time to cause a second display means to display content (for example, a webpage) that corresponds to the display information. However, in the invention disclosed in Patent Document 1 content must be selected by a user in order to be displayed. This can be a drawback for some users in that stress may be induced in a user due to a delay that occurs between selection of content by the user and display of the selected content.

In view of above-stated drawback, it is an object of the present invention to cause a second display means to display content that corresponds to information displayed on a first display means, without need for a selection operation by a user.

### Means for Solving the Problems

To solve the problem, the present invention provides a display apparatus, comprising: a first display means; a second display means; an acquiring means that acquires relevant information relevant to content; a selecting means that selects one or more content from among a plurality of content based on relevant information acquired by the acquiring means for each of the plurality of content, items of display information for displaying the plurality of content being displayed on the first display means; and a display control means that causes the second display means to display the one or more content selected by the selecting means.

The acquiring means may acquire, for each of the plurality of content, as relevant information, information indicating an amount of processing performed relative to the content based on a user's operation, and the selecting means may select one or more content based on the amounts of processing indicated in the acquired relevant information.

The acquiring means may acquire information indicating a user attribute as relevant information, and the selecting means may select one or more content based on a relevance between the user attribute and each of the plurality of content.

The acquiring means may acquire information indicating a location of the display apparatus or a current time as relevant information, and the selecting means may select one or more content based on a relevance between the location or current time indicated in the relevant information and each of the plurality of content.

The acquiring means may acquire as relevant information, information indicating a position on the first display means, a user's line of vision crossing the position, and the selecting means may select one or more content corresponding to display information displayed at the position indicated in the acquired relevant information.

The acquiring means may acquire as relevant information for each of the items of display information, information indicating a time, the display information being displayed on the first display means during the indicated time, and the selecting means may select one or more content based on lengths of times indicated in the acquired relevant information.

The display control means may cause the second display means to display a list of the one or more content selected by the selecting means, and cause the first display means to display a list image representing the list.

The display control means may display the selected one or more content in a manner or at a position, the manner or position corresponding to a priority determined based on relevant information for the one or more content.

The display control means may cause the first display means to display display information corresponding to the one or more content displayed on the second display means, in a manner different to another item of display information.

The present invention provides a display method performed by a display apparatus including a first display means and a second display means, the display method comprising: acquiring relevant information relevant to content; selecting one or more content from among a plurality of content based on relevant information acquired at the acquiring step for each of the plurality of content, items of display information for displaying the plurality of content being displayed on the first display means; and causing the second display means to display the one or more content selected at the selecting step.

### Effects of the Invention

By use of the present invention it is possible to cause a second display means to display content that corresponds to information displayed on a first display means, without need for a user to carry out a selection operation.

### Brief Description of the Drawings

Fig. 1 is a diagram showing an example of a hardware configuration of a display apparatus according to a first embodiment.
Fig. 2 is a diagram showing one example of an appearance of the display apparatus.
Fig. 3 is a diagram showing an example of a functional configuration of the display apparatus.
Fig. 4 is a diagram showing an example of display information on a display.
Fig. 5 is a diagram showing an example of a processing amount information table.
Fig. 6 is a diagram showing an example of content displayed.
Fig 7 is a flow diagram showing an example of display processing performed by the display apparatus.
Fig. 8 is a diagram showing an example of an attribute relevance table.
Fig. 9 is a diagram showing an example of a location relevance table.
Fig. 10 is a diagram showing an example of a time relevance table.
Fig. 11 is a diagram showing a method for acquiring display time information.
Fig. 12 is a diagram showing an example of two or more sets of displayed content.
Fig. 13 is a diagram showing content displayed in a manner corresponding to priority.
Fig. 14 is a diagram showing an example of a list image.
Fig. 15 is a diagram showing an example of images displayed on first and second display means in accordance with one modification.

### Explanation of Reference Numerals

1 ··· Display apparatus, 11 ··· Control unit, 12 ··· Storage unit, 13 ··· Communication unit, 14 ··· Operation input unit, 15 ··· Positioning unit, 16 ··· Image capture unit, 20 ··· Front display unit, 21 ··· Front display surface, 30 ··· Rear display unit, 31 ··· Rear display surface, 101 ··· First display means, 102 ··· Second display means, 103 ··· Acquiring unit, 104 ··· Selecting unit, 105 ··· Display control unit

### Modes for Implementing the Invention

### [1] First embodiment

### [1-1] Hardware configuration

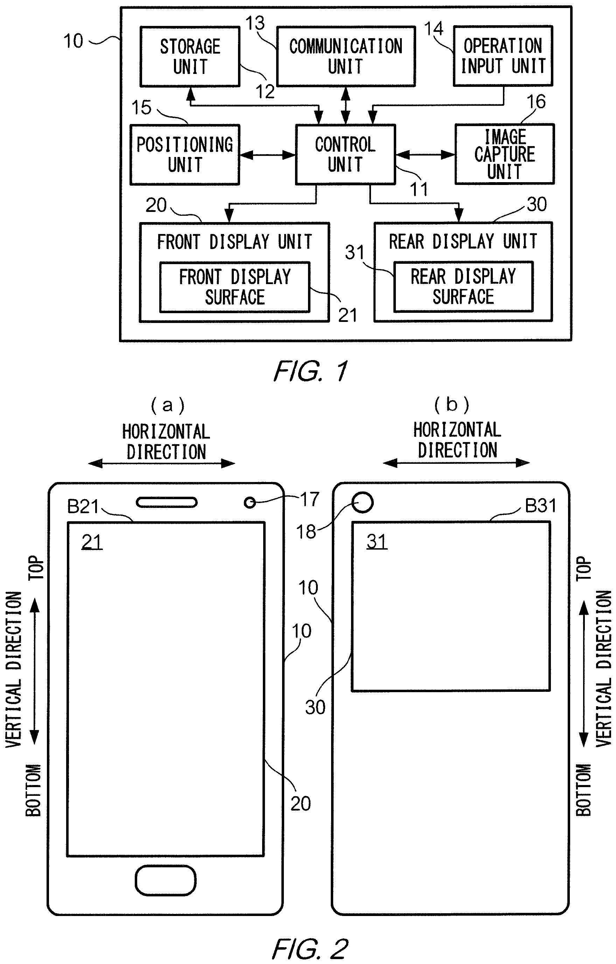

Fig. 1 is a diagram showing an example of a hardware configuration of a display apparatus according to a first embodiment. Display apparatus 10 shown in Fig. 1 includes control unit 11, storage unit 12, communication unit 13, operation input unit 14, front display unit 20, and rear display unit 30. Positioning unit 15 and image capture unit 16 shown in Fig. 1 will be described later in relation to a second embodiment. Display apparatus 10 is a computer for processing information, and may be, for example, a smartphone, a tablet terminal, or a mobile phone.

Control unit 11 includes a CPU (Central Processing Unit), a ROM (Read Only Memory), a RAM (Random Access Memory), and a real-time clock. The CPU executes programs stored in the ROM or storage unit 12, while using the RAM as a work area, so as to control operations of components. The real-time clock calculates a current date and time and notifies the same to the CPU. Storage unit 12 includes a memory, such as a flash memory, which stores data and programs used by control unit 11. Communication unit 13 includes a communication circuit for performing communication wherein data is exchanged via a network such as the Internet. Operation input unit 14 includes a touch screen and/or keys, for accepting input by a user. Front display unit 20 and rear display unit 30 will now be described with reference to Fig. 2 as well as Fig. 1.

Fig. 2 illustrates one example of an appearance of display apparatus 10; with Fig. 2(a) illustrating the front side of display apparatus 10, and Fig. 2(b) illustrating the rear side of display apparatus 10. Front display unit 20 is a display including front display surface 21 arranged on the front side of display apparatus 10. Front display unit 20 displays images on front display surface 21 under control of control unit 11. Rear display unit 30 is a display including rear display surface 31 arranged on the rear side of display apparatus 10. Rear display unit 30 displays images on rear display surface 31 under control of display apparatus 10. Front display surface 21 is rectangular in shape. Hereinafter, a direction extending parallel to a longitudinal side of front display surface 21 will be referred to as a "vertical direction," while a direction extending parallel to a transverse side of the display surface 21 will be referred to as a "horizontal direction." Rear display surface 31 also is rectangular in shape; and each side extends either in a vertical direction or in a horizontal direction. In the present embodiment, rear display surface 31 is shorter in the vertical direction comparative to front display surface 21.

### [1-2] Functional configuration

Storage unit 12 of display apparatus 10 stores a program for displaying content. Control unit 11 executes the program to control components so as to realize the functions described below.

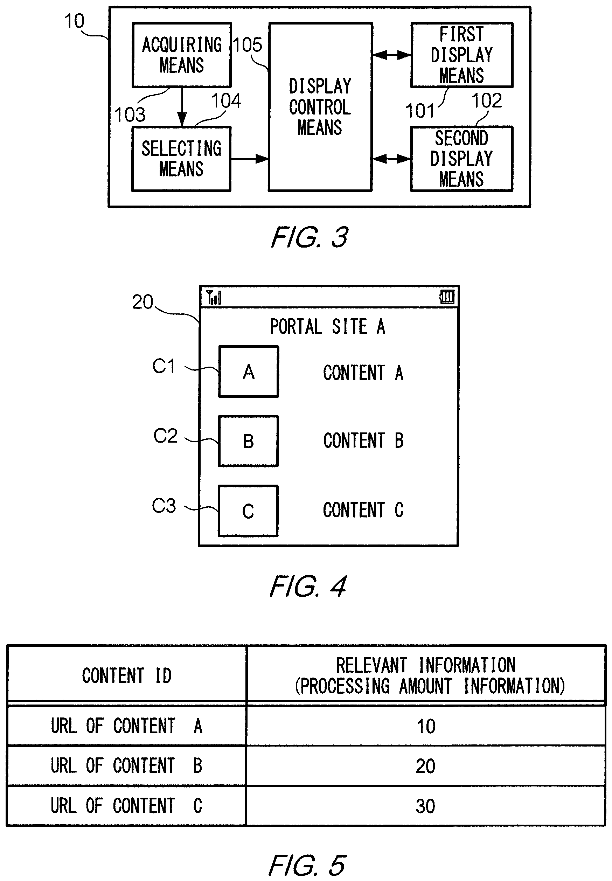

Fig. 3 is a diagram showing one example of a functional configuration of display apparatus 10. Display apparatus 10 includes first display means 101, second display means 102, acquiring means 103, selecting means 104, and display control means 105.

### [1-2-1] First display means and second display means

First display means 101 and second display means 102 are used to display images, which may include content such as a post on a website or an SNS (Social Networking Service), a map, or an email. Content is caused to be displayed on first display means 101 and second display means 102 by executing a computer program (hereinafter, "display program") used to provide a function of displaying content, such as a browser, SNS software, or a mailer. Front display unit 20 and rear display unit 30 of display apparatus 10 may correspond to either first display means 101 or to second display means 102.

### [1-2-2] Acquiring means

Acquiring means 103 acquires information (hereinafter, "relevant information") that is related to content. In the present embodiment, acquiring means 103 acquires as relevant information, information (hereinafter, "processing amount information") indicative of an amount of processing that has been performed on content as a result of a user's operation. Such processing may include, for example, processing for displaying content, processing for operating a key provided within content, or processing for entering text into an entry field that is provided within content. Below, an example will be described in which acquiring means 103 acquires processing amount information for processing carried out to display content.

Content often contains information (hereinafter, "display information") that enables other content to be displayed. Such display information may be, for example, a hyperlink that connects to content. Specifically, such display information may be a hyperlink that connects to a website, an SNS post, or a mailer. A hyperlink that connects to a mailer enables the mailer to be activated in response to selection of an email address being displayed using a browser. Such a hyperlink that leads to a mailer is sometimes referred to as a "mailto: link." The display information may include text (for example, a URL (Uniform Resource Locator)) indicative of a storage site for content to be displayed, or an image or text that indicates to a user content to be displayed. Selection of display information by a user triggers display of content.

Fig. 4 is a diagram showing an example of display information viewable on a display. Fig. 4 shows portal site A displayed on front display unit 20. Herein, "portal site" refers to a website that contains one or more hyperlinks to content. Portal site A contains display information C1 showing a hyperlink to "content A." Relations between "content A" and "display information C1" will hereinafter variously be referred to as "content A" corresponding to "display information C1," "display information C1" corresponding to "content A," or "content A" displayed using "display information C1." Fig. 4 shows display information C2 corresponding to "content B" and display information C3 corresponding to "content C." Upon selection by a user of, for example, display information C1 display of content A is triggered. It is of note that display information corresponding to content A, B, or C may be located on a website other than portal site A, or in an SNS post, or in an email.

Acquiring means 103, in response to display of content, stores in a processing amount information table, data on a number of times that content has been displayed, in association with information (hereinafter, "content ID") that identifies the displayed content. The content ID may include, for example, a URL of a webpage, a URL of an SNS post, or an email address. The content ID may be any information that can be used to identify content.

Fig. 5 is a diagram showing an example of the processing amount information table. Fig. 5 shows that a content ID such as a "URL of content A," a "URL of content B," or a "URL of content C" is associated with processing amount information such as "10," "20," or "30." A URL for each such content is written in the form "http//... com." The processing amount information shown in Fig. 5 indicates that display apparatus 10 has displayed content A 10 times, content B 20 times, and content C 30 times.

In the present embodiment, acquiring means 103 acquires processing amount information for an unspecified period of time. However, in another embodiment, acquiring means 103 may acquire processing amount information for a specified period of time. Specifically, acquiring means 103 may acquire data on an amount of processing that has been performed in the past half year or in the past three months.

Upon receipt of, for example, a content ID of content A together with a request for processing amount information, acquiring means 103 acquires as relevant information, processing amount information that is associated with the content ID in the processing amount information table. Acquiring means 103 subsequently provides the acquired relevant information (in the present embodiment, the processing amount information) to selecting means 104.

### [1-2-3] Selecting means

Selecting means 104 is a means for selecting one or more content from among a plurality of content that corresponds to a plurality of items of display information displayed on first display means 101, based on relevant information acquired by acquiring means 103 for each of the plurality of content. The case where plural items of display information are displayed on first display means 101 refers to, for example, a case where portal site A shown in Fig. 4 is displayed on either front display unit 20 or rear display unit 30. In the exemplary case, acquiring means 103 acquires relevant information for each of content A, B, and C corresponding to display information C1, C2, and C3, respectively, and provides the acquired relevant information to selecting means 104.

In the present embodiment, selecting means 104 selects one or more content based on processing amounts indicated in the acquired relevant information. Selecting means 104, if processing amount information shown in Fig. 5 is acquired for each of content A, B, and C, selects content (in the example shown in Fig. 5, "content C" associated with processing amount information "30") for which an amount (in the example shown in Fig. 5, the number of times) indicated in processing amount information is largest. After selecting the content, selecting means 104 provides, for example, a content ID of the selected content to display control means 105.

### [1-2-4] Display control means

Display control means 105 is a means for causing second display means 102 to display one or more content selected by selecting means 104.

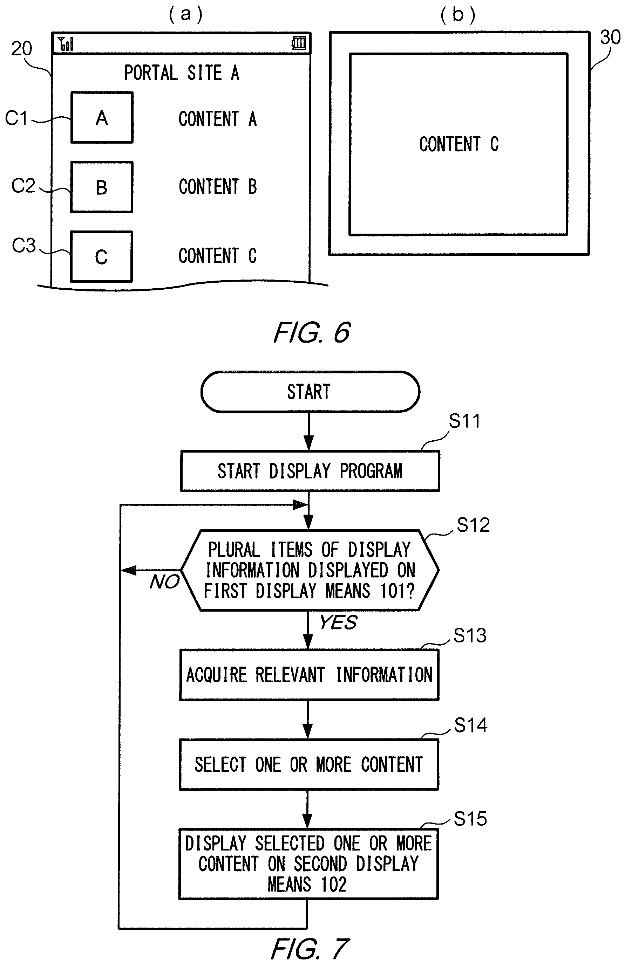

Fig. 6 is a diagram showing an example of displayed content. Fig. 6(a) shows portal site A, which also is shown in Fig. 4, and is displayed on front display unit 20. In the example shown in Fig. 6, front display unit 20 corresponds to first display means 101. In response to display of portal site A, acquiring means 103 and selecting means 104 operate as described above, and selecting means 104 provides a content ID of content C to display control means 105. Display control means 105 acquires content, which in the example shown in Fig. 5 is content C, the content being identified by the provided content ID and acquired from among content A, B, and C corresponding respectively to display information C1, C2, and C3 displayed on first display means 101 (front display unit 20). As shown in Fig. 6(b), display control means 105 subsequently causes rear display unit 30 to display the acquired content. In the example shown in Fig. 6, rear display unit 30 corresponds to second display means 102.

### [1-3] Operation

Display apparatus 10, which has the configuration described above, performs display processing to display content. This display processing will now be described with reference to Fig. 7.

Fig. 7 is a flow diagram showing an example of the display processing performed by display apparatus 10. The display processing may be triggered, for example, when a user starts the display program by use of a browser, SNS software, a mailer, or the like. Initially, display apparatus 10 starts the display program (step S11). Then display apparatus 10 determines whether first display means 101, which may be front display unit 20 or rear display unit 30, currently is displaying plural items of display information (step S12).

If display apparatus 10 makes a negative determination at step S12 (NO), it retries step S12; on the other hand, if display apparatus 10 makes an affirmative determination at step S12 (YES), it acquires relevant information for each content corresponding to displayed items of display information (step S13). Step S13 is performed by acquiring means 103, and display apparatus 10 then selects one or more content from among the content corresponding to the plural items of display information displayed on first display means 101, based on the acquired relevant information (step S14). Steps S12 and S14 are performed by selecting means 104. Display apparatus 10 subsequently causes second display means 102 (the other one of front display unit 20 and rear display unit 30) to display the one or more content selected at step S14 (step S15). Step S15 is performed by display control means 105.

### [1-4] Effects achieved by the first embodiment

As explained relative to display apparatus 10, provision of a display apparatus that is provided with two display means is convenient for a user, since one of the display means can be used to show display information while the other of the display means can be used to show content corresponding to the display information displayed responsive to selection by the user of a part of the information displayed. However, use of this display method, which requires user selection of particular information to display corresponding content may induce stress in the user while waiting for the content to be displayed. In the present embodiment a second display means displays content corresponding to information (display information) displayed on a first display means, without need for a selection operation by the user and consequent time lag in displaying the corresponding selected content. In short, in the present embodiment the second display means is able to display content corresponding to a selection of display information without any noticeable time lag comparative to the above-described method.

In the present embodiment, selection and display of content is made based on processing amount information, which indicates an amount of processing that has been performed relative to content in response to a user's operation. The processing amount information implies a possibility that a user instructs the processing. Taking processing to display content as an example, content that has been displayed 100 times is more likely to be caused to be displayed by a user, as compared to content that has been displayed only 10 times. For this reason, the present embodiment enables the second display means to display content a user is likely to instruct to be displayed, as compared to selecting content regardless of its processing amount information.

In the first embodiment, selecting means 104, which selects content for which processing amount information indicates a largest amount of processing, may additionally select other content for which processing amount information indicates a second largest amount. Further, selecting means 104 may select other content for which processing amount information represents a third largest amount. Conversely, selecting means 104 may select content for which processing amount information indicates a smaller amount, because there is some content that a user loses an interest in by viewing them several times. In the case of such a type of content, a user is likely to have an interest in content for which processing amount information indicates a smaller amount of processing, rather than content for which processing amount information indicates a higher amount of processing. For this reason, by selecting content for which processing amount information indicates a smaller amount of processing, the second display means may display content a user is likely to instruct to be displayed.

In the above first embodiment, where processing amount information represents a number of times of processing, the processing amount information may represent a frequency of processing or a time taken for processing. In the case of processing for posting a message, processing amount information may represent an amount of data constituting the posted message. If an image or file is attached to the message, an amount of data constituting the attachment may also be added to the processing amount. In another embodiment, an amount of processing carried out for each processing may be given a predetermined weighting for each processing. For example, processing for displaying an SNS post may be given a weighting twice that given to processing for displaying a webpage.

### [2] Second embodiment

A second embodiment of the present invention, with particular reference to differences relative to the first embodiment will now be described below. In contrast to the first embodiment, which employs a method (hereinafter, "first selecting method") of selecting content based on processing amount information as relevant information, the second embodiment employs five methods (hereinafter, "second selecting method" to "sixth selecting method") for selecting content based on relevant information that is different to that utilized in the first selecting method.

### [2-1] Second selecting method

In the second selecting method, acquiring means 103 acquires a user attribute as relevant information. Herein, the expression, "user attribute" refers to an attribute of a user such as a hobby, a special ability, a field of interest, or an activity that the user has participated in, such as playing in a band, or in a baseball team. Acquiring means 103, for example, may allow a user using display processing to register his/her user attribute(s) in a memory; and as shown in Fig. 7, at step S13 acquiring means 103 acquires the stored user attribute. In another embodiment, acquiring means 103 may access an external apparatus used for storing user attributes to acquire a stored user attribute (for example, an apparatus that manages user attributes to provide a service to users).

Selecting means 104 selects one or more content based on relevance (hereinafter, "attribute relevance") between the acquired user attribute and content. For example, selecting means 104 selects one or more content containing a large number of keywords corresponding to the user attribute. In this case, selecting means 104 determines an attribute relevance by referring to the number of keywords corresponding to the user attribute, and contained in content. To do so, selecting means 104 pre-stores an attribute relevance table associating a user attribute, keywords, the number of keywords, and an attribute relevance.

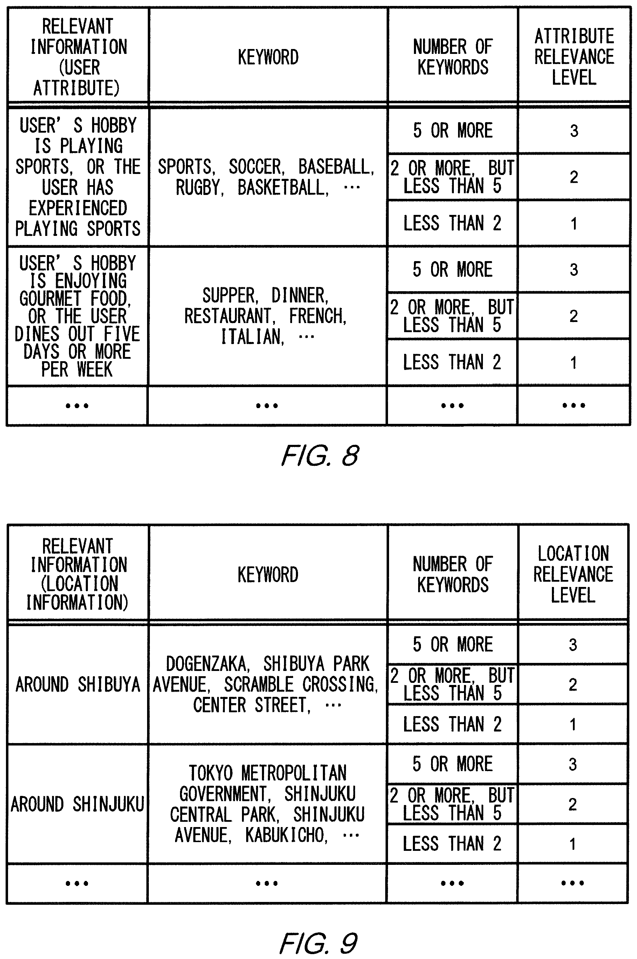

Fig. 8 is a diagram showing an example of the attribute relevance table. The attribute relevance table shown in Fig. 8 associates a user attribute "user's hobby is playing sports, or the user has experienced playing sports," keywords "sports, soccer, baseball, rugby, basketball, ...," the number of keywords "5 or more," "2 or more, but less than 5," and "less than 2," and corresponding attribute relevance of "3," "2," and "1." The attribute relevance table also associates a user attribute "user's hobby is enjoying gourmet food, or the user dines out five days or more per week," keywords "supper, dinner, restaurant, French, Italian, ...," the number of keywords "5 or more," "2 or more, but less than 5," and "less than 2," and corresponding attribute relevance of "3," "2," and "1."

Selecting means 104, for example, in a case where items of display information C1, C2, and C3 shown in Fig. 4 are displayed, and a user attribute "user's hobby is playing sports" is acquired, acquires content A, B, and C corresponding to the items of display information, and counts a number of keywords present in respective content, which keywords are associated with the user attribute(s) in the attribute relevance table. As a result of the count, if selecting means 104 finds that content A, B, and C contain 10 keywords, one keyword, and four keywords, respectively, the selecting means determines an attribute relevance for content A, B, and C to be "3," "1," and "2," respectively, and selects content A as having the highest attribute relevance.

The second selecting method enables selection and display of content based on its attribute relevance, as described in the foregoing. As an example, content containing 10 keywords relating to sports (content having a high attribute relevance) is more likely to be relevant to sports as compared to content containing only one keyword relating to sports (content having a lower attribute relevance). A user who enjoys playing sports as a hobby is likely to have more interest in content containing 10 keywords relating to sports. A user is likely to instruct the display of content in which s/he is interested rather than content s/he is not interested in. For this reason, the second selecting method enables the second display means to display content a user is likely to instruct to be displayed, as compared to selecting content regardless of its attribute relevance.

Selecting means 104 using the second selecting method may select content having a lower attribute relevance, as in the case of the first selecting method. Specifically, selecting means 104 may select one or more content containing a smaller number of keywords corresponding to a user attribute, because some users interested in sports may wish to enjoy watching a recorded game at home, instead of simply browsing game results on display apparatus 10. Moreover, if the user is informed of results of sport-related content by having such content selected and displayed, s/he is liable to have their enjoyment of watching a recorded game compromised, since the result will already have been made known to them. Selecting means 104, by selecting content having a lower attribute relevance, is able to reduce the chances of such a problem occurring.

Selecting means 104 may determine an attribute relevance in a different manner. For example, in a case where the display information is a URL, selecting means 104 may pre-store associations of a domain name (for example, a domain name of a sports newspaper company), a user attribute (for example, a sport-related attribute), and an attribute relevance, and determine an attribute relevance based on a combination of a domain name of displayed display information and an acquired user attribute. Namely, selecting means 104 may select one or more content corresponding to display information including a domain name more relevant to a user attribute. In this case, selecting means 104 does not need to perform processing to count the number of keywords contained in content. Alternatively, selecting means 104 may determine an attribute relevance based on a degree of similarity between text contained in content and text representing a user attribute, using a commonly-used technique for determining a degree of similarity between texts. Namely, selecting means 104 may select one or more content containing text more similar to text representing a user attribute. In essence, selecting means 104 may determine an attribute relevance that indicates a relevance between content and a user attribute. The methods described herein may be applied to the other selecting methods.

### [2-2] Third selecting method

In the third selecting method, acquiring means 103 acquires information (hereinafter, "location information") indicative of a location of display apparatus 10 as relevant information. Display apparatus 10 includes positioning unit 15 as shown in Fig. 1, which measures a location of the display apparatus using a GPS (Global Positioning System) technology. Positioning unit 15 provides as location information, for example, latitude and longitude information indicative of a measured location to control unit 11. Acquiring means 103 acquires the provided location information as relevant information. In another embodiment, location information may be information indicating a base station.

Selecting means 104 selects one or more content based on a degree of relevance (hereinafter, "location relevance") between a location indicated in the acquired relevant information and content. For example, selecting means 104 selects one or more content containing a large number of keywords corresponding to a location indicated in the acquired relevant information. In this case, selecting means 104 determines a location relevance by referring to the number of keywords corresponding to the location information, contained in content. To do so, selecting means 104 pre-stores a location relevance table associating location information, keywords, the numbers of keywords, and location relevance.

Fig. 9 is a diagram showing an example of the location relevance table. The location relevance table shown in Fig. 9 associates location information "around Shibuya," keywords "Dogenzaka, Shibuya park avenue, scramble crossing, center street, ...," the number of keywords "5 or more," "2 or more, but less than 5," and "less than 2," and corresponding location relevance of "3," "2," and "1." The location relevance table also associates location information "around Shinjuku," keywords "Tokyo metropolitan government, Shinjuku central park, Shinjuku avenue, Kabukicho, ...," the number of keywords "5 or more," "2 or more, but less than 5," and "less than 2," and corresponding location relevance of "3," "2," and "1."

Selecting means 104 pre-stores information on a range of latitudes and longitudes of the vicinity of Shibuya and data on a range of latitudes and longitudes of the vicinity of Shinjuku, and on detecting that a latitude and longitude indicated in the acquired location information falls within the range of latitudes and longitudes of the vicinity of Shibuya (or Shinjuku), determines that the location information represents the vicinity of Shibuya (or Shinjuku). In another embodiment, acquiring means 103 may perform the determination. In that case, acquiring means 103 acquires location information "around Shibuya" or "around Shinjuku" to provide it to selecting means 104.

Selecting means 104, for example, in a case where items of display information C1, C2, and C3 shown in Fig. 4 are displayed, and location information determined to be "around Shibuya" is acquired, acquires content A, B, and C corresponding to the items of display information, and counts the number of keywords contained in each of the content, which keywords are associated with the location information "around Shibuya" in the location relevance table. Selecting means 104 subsequently selects content in the same manner as the second selecting method. Specifically, selecting means 104 identifies, for each of the content, a location relevance associated with the number counted in the location relevance table, and selects content having the highest location relevance.

The third selecting method enables selection and display of content based on a location relevance, as described in the foregoing. As an example, content containing 10 keywords relating to the vicinity of Shibuya (content having a high location relevance) is more likely to be relevant to the vicinity of Shibuya as compared to content containing only one keyword relating to the vicinity of Shibuya (content having a lower location relevance). A user located near Shibuya is likely to have more interest in the content containing 10 keywords relating to the vicinity of Shibuya. For this reason, the third selecting method enables the second display means to display content that a user is likely to instruct to be displayed, as compared to selecting content regardless of its location relevance.

Selecting means 104 may select content based on a relevance between content and a location to which a moving user is heading, not a current location of the user. Specifically, in a case where a user has moved from Shibuya to Shinjuku, selecting means 104 may anticipate that the user will move to Ikebukuro, and select content based on a relevance between content and Shinjuku, and also select content based on a relevance between content and Ikebukuro.

### [2-3] Fourth selecting method

In the fourth selecting method, acquiring means 103 acquires information (hereinafter, "time information") indicative of a current time as relevant information. The time herein includes a certain time period of a day such as commuting hours, and a certain time period of a month or a year such as a year-end and new-year, Golden Week holidays, and a summer vacation. Acquiring means 103 pre-stores information on predetermined time periods, and acquires information indicative of a time period including a current date and time, as time information.

In another embodiment, selecting means 104 may pre-store the information on predetermined time periods, and identify a current time period. In that case, acquiring means 103 acquires a current date and time as time information and provides it to selecting means 104, which then identifies a time period including the current date and time.

Selecting means 104 selects one or more content based on a relevance (hereinafter, "time relevance") of a time indicated in the acquired relevant information and content. For example, selecting means 104 selects one or more content containing a large number of keywords corresponding to a time indicated in the acquired relevant information. To do so, selecting means 104 stores a time relevance table associating time information, keywords, the numbers of keywords, and time relevance.

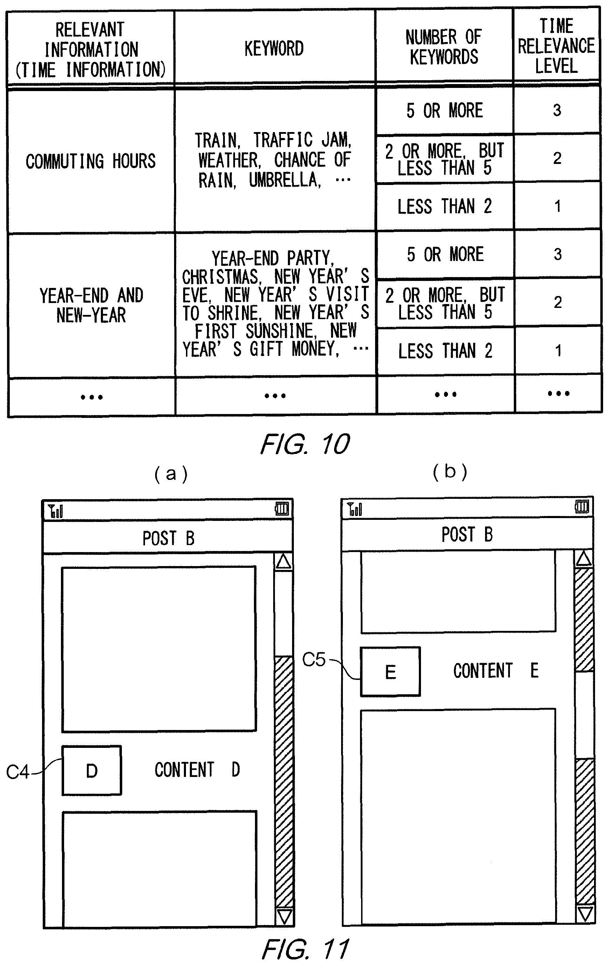

Fig. 10 is a diagram showing an example of a time relevance table. The time relevance table shown in Fig. 10 associates time information "commuting hours," keywords "train, traffic jam, weather, chance of rain, umbrella, ...," the numbers of keywords "5 or more," "2 or more, but less than 5," and "less than 2," and corresponding time relevance of "3," "2," and "1." The time relevance table also associates time information "year-end and new-year," keywords "year-end party, Christmas, new year's eve, new year's visit to shrine, new year's first sunshine, new year's gift money, ...," the numbers of keywords "5 or more," "2 or more, but less than 5," and "less than 2," and corresponding time relevance of "3," "2," and "1."

Selecting means 104, for example, in a case where items of display information C1, C2, and C3 shown in Fig. 4 are displayed, and time information determined to be "commuting hours" is acquired, acquires content A, B, and C corresponding to the items of display information, and counts the number of keywords contained in each content, which keywords are associated with the time information "commuting hours" in the time relevance table. Selecting means 104 subsequently selects content in the same manner as the second selecting method. Specifically, selecting means 104 identifies, for each of the content, a time relevance associated with the number counted in the time relevance table, and selects content having the highest time relevance. In another embodiment, selecting means 104 may select content having a lower time relevance, instead of selecting content having a higher time relevance. Specifically, selecting means 104 may select one or more content containing a smaller number of keywords corresponding to a time indicated in acquired relevant information.

The fourth selecting method enables selection and display of content based on a time relevance, as described in the foregoing. As an example, content containing 10 keywords relating to commuting hours (content having a higher time relevance) is more likely to be viewed during commuting hours as compared to content containing only one keyword relating to commuting hours (content having a lower time relevance). In short, a user is likely to have more interest in the content containing 10 keywords relating to commuting hours. Because of the reason, the fourth selecting method enables to cause the second display means to display content a user is likely to instruct to be displayed, as compared to selecting content regardless of its time relevance.

### [2-4] Fifth selecting method

In the fifth selecting method, acquiring means 103 acquires information (hereinafter, "visual line information") indicative of a position on a display surface of first display means 101, at which a user's visual line crosses, as relevant information. Display apparatus 10 includes image capture unit 16 as shown in Fig. 1, which functions, for example, as a digital camera. Image capture unit 16 captures an image by way of lens 17 arranged at the front side and lens 18 arranged at the rear side, which lenses are shown in Fig. 2. Image capture unit 16 provides image data representing the captured image to control unit 11. Acquiring means 103 analyzes the facial image of a user captured by image capture unit 16 to calculate a coordinate of a position at which a user's visual line crosses the display surface. To do so, acquiring means 103 may use a commonly known technique for detecting a visual line. Acquiring means 103 acquires the calculated coordinate as visual line information.

Selecting means 104 selects one or more content corresponding to display information displayed at a position indicated in the acquired relevant information. Specifically, selecting means 104, in a case where coordinates indicated in visual line information are included for a given time period or more in an area (hereinafter, "display information area") of the display surface of first display means 101, showing display information, selects content corresponding to the display information. Once selecting means 104 selects content, the selecting means may not reselect another content in a case where coordinates indicated in visual line information are included in another display information area for a given time period or more. In another embodiment, selecting means 104 may reselect content in that case.

In general, a user is likely to direct his/her look at display information in which s/he is highly interested. The fifth selecting method, which enables to select and display content corresponding to display information displayed at a position indicated in visual line information, enables to cause the second display means to display content a user is likely to instruct to be displayed, as compared to selecting content regardless of visual line information.

### [2-5] Sixth selecting method

In the sixth selecting method, acquiring means 103 acquires information (hereinafter, "display time information") indicative of a time during which first display means 101 displays display information, as relevant information. A method in which acquiring means 103 acquires display time information will be described with reference to Fig. 11.

Fig. 11 is a diagram showing a method for acquiring display time information. Fig. 11 shows post B displayed on front display unit 20. Fig. 11(a) shows display information C4 contained in post B.

Fig. 11(b) shows post B scrolled downward as compared to that shown in Fig. 11 (a). Fig. 11(b) shows display information C5 contained in post B. Acquiring means 103 acquires information on a time elapsing after display information C4 appears on the screen and before the display information disappears from the screen by scrolling post B, as display time information for display information C4. Acquiring means 103 also acquires information on a time elapsing after display information C5 appears on the screen and before the display information disappears from the screen by scrolling post B, as display time information for display information C5.

Selecting means 104 selects one or more content based on a time length indicated in relevant information acquired for each of items of display information displayed on first display means 101. Specifically, selecting means 104 selects content corresponding to display information displayed longer. For example, in a case where display time information for display information C4 shown in Fig. 11 is four seconds, and display time information for display information C5 shown in the same drawing is 10 seconds, selecting means 104 selects display information C5 whose display time information represents a longer time.

In general, a user is likely to browse content highly interesting to him/her for a longer time. The sixth selecting method, which enables selection and display of content based on time lengths indicated in display time information, the content corresponding to display information displayed longer, enables the second display means to display content a user is likely to instruct to be displayed, as compared to selecting content regardless of its display time information.

In another embodiment, selecting means 104 may select display content for which display time information represents a shorter time. Specifically, selecting means 104 may select one or more content corresponding to display information displayed on first display means 101, relevant information acquired for the display information representing a shorter time. This selecting method enables to display content corresponding to display information that a user has possibly overlooked, thereby preventing the user from overlooking the content.

### [2-6] Selecting method using different types of relevant information

Selecting means 104 may select content based on different types of relevant information described above. For example, selecting means 104 may determine a priority for each content and select content based on the determined priority. To determine a priority, selecting means 104 calculates, for each of the selecting methods, a value to be used to determine a priority, in a predetermined manner. For the second, third, and fourth selecting methods, selecting means 104 may identify an attribute relevance, a location relevance, and a time relevance, as the value. For the first, fifth, and sixth selecting methods, selecting means 104 may convert into a value from 1 to 3, an amount of processing for each content, a length of time during which a user views display information, and display time of display information. Selecting means 104 adds up the values determined for the first to sixth selecting methods and thereby identifies a priority.

Selecting means 104 selects content having the highest priority, or selects a predetermined number of content having a higher priority. It is of note that a range of a calculated value, which is common to all the selecting methods (in the above example, from one to three), may differ from a selecting method from another. By differentiating a range of a calculated value, selecting methods can be weighted; in other words, effects on a priority of selecting methods can be differentiated.

### [3] Modification

The above embodiments are merely examples of embodiments of the present invention. The above embodiments may be modified as described below. The above embodiments and the following modifications may be combined with each other.

### [3-1] Displaying two or more content

Display control means 105 may display two or more content selected by selecting means 104, as described below.

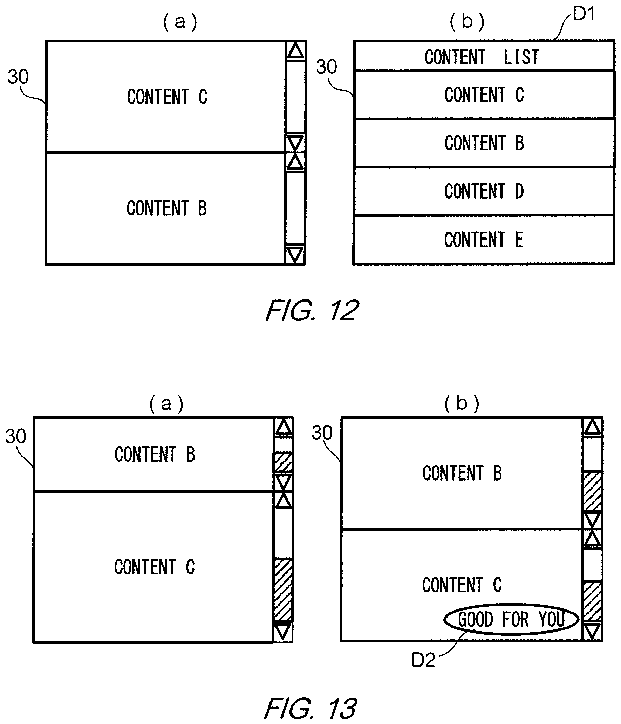

Fig. 12 is a diagram showing an example of displayed two or more content. Fig. 12(a) shows an example in which display control means 105 divides the display surface of second display means 102 into two areas, in each of which the display control means causes the second display means to display content selected by selecting means 104. A user may scroll each of the content to browse the content in its entirety.

Fig. 12(b) shows another example in which display control means 105 causes second display means 102 to display list D1 of content selected by selecting means 104. Display control means 105, in response to a user's operation to select one of the listed content, causes, for example, second display means 102 to display the selected content in its entirety. As described in the foregoing, display control means 105, in response to a user's operation, causes second display means 102 to display two or more content selected by selecting means 104 so that the user can view each of the content.

In the example shown in Fig. 12, display control means 105 displays each of the selected two or more content at a position corresponding to a priority described above, determined for the content based on relevant information. Specifically, display control means 105 displays the selected two or more content in order of priority. Fig. 12(a) shows an example in which content C has a higher priority than content B so that display control means 105 displays content C at an upper position, and content B at a lower position. Fig. 12(b) shows another example in which content C, B, D, and E have a higher priority in that order, and display control means 105 displays the listed content in descending order of priority from top to bottom.

When viewing a rectangular display surface such as front display surface 21 or rear display surface 31, a user is likely to move his/her gaze from top to bottom and from left to right. Because of this tendency, a user easily recognizes content positioned at the top or the left; on the other hand, a user can overlook content positioned at the bottom or the right. The present modification enables to display content at a position corresponding to its priority so that a user can easily recognize content having a higher priority.

Display control means 105 may display content in a manner corresponding to a priority described above. Specifically, display control means 105 may display content in such a manner that content having a higher priority occupies a larger display area.

Fig. 13 is a diagram showing an example of content displayed in a manner corresponding to priority. Fig. 13(a) shows an example in which display control means 105 divides the display surface of second display means 102 into different-sized area, and causes the second display means to display content (in the present example, content C) having the higher priority in the larger area, and content (in the present example, content B) having the lower priority in the smaller area, so that a user can easily recognize the content having the higher priority.

Display control means 105 may highlight content having a higher priority. Fig. 13(b) shows an example in which display control means 105 displays image D2 showing the text "good for you" superimposed over content C, although content C is the same size as content B. In this way a user's attention will be drawn to content C, which has a higher priority, rather than to content B. It is of note that a correspondence to a priority is not limited to the example shown in Fig. 13(b). In another embodiment, display control means 105 may change a color or size of content, or a size or font of characters according to a priority.

### [3-2] Display of a list

Display control means 105, after causing second display means 102 to display a list of content selected by selecting means 104 as in the case of list D1 shown in Fig. 12(b), may then cause first display means 101 to display an image of the list (hereinafter, "list image").

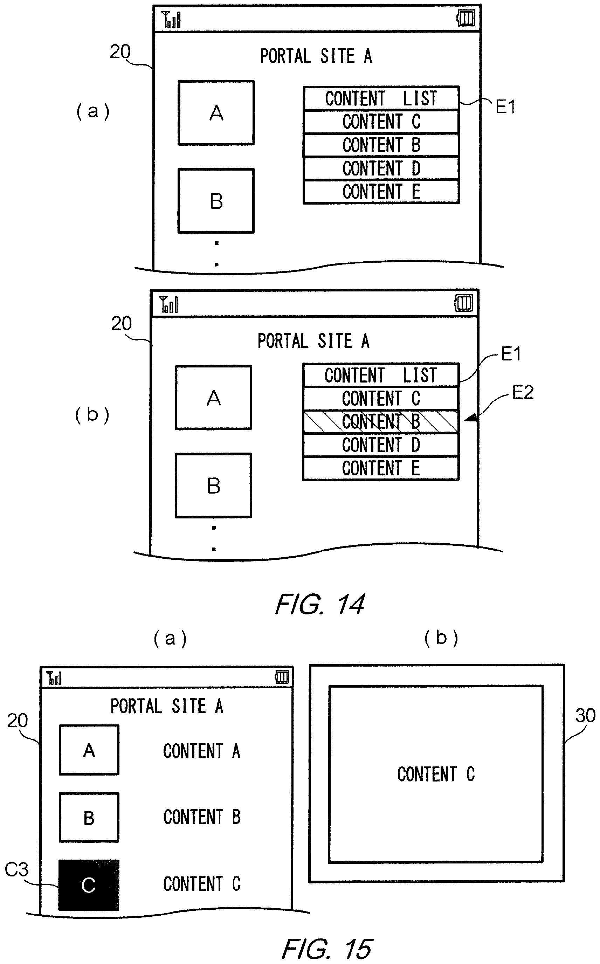

Fig. 14 is a diagram showing an example of the list image. Fig. 14(a) shows an example in which display control means 105 causes front display unit 20 (in the present example, first display means 101) to display list image E1 of list D1.

List image E1 shows text "content list" and a list of content. Fig. 14(b) shows another example in which display control means 105 causes front display unit 20 to display content B with a thick frame and hatching, which content has been selected by a user on rear display unit 30 (in the present example, second display means 102). By browsing list image E1, the user, while viewing first display means 101, can confirm a list of content displayed on second display means 102, and also confirm content s/he is going to select from among the content.

### [3-3] Display of display information

Display control means 105, after causing second display means 102 to display content, may cause first display means 101 to display display information corresponding to the content in a different manner from other items of display information.

Fig. 15 is a diagram showing an example of images displayed on the first and second display means according to the present modification. Fig. 15(a) shows portal site A shown in Fig. 6, displayed on front display unit 20. Fig. 15(b) shows content C selected by selecting means 104 and displayed on rear display unit 30.

Display control means 105 displays display information C3 in a highlighted manner (text "C" is outlined), which corresponds to content C displayed on second display means 102 (in the present example, rear display unit 30). By browsing highlighted display information C3, a user, while viewing first display means 101, can confirm content displayed on second display means 102.

In another embodiment, display control means 105, instead of highlighting display information, may make text bold, enlarge an image, or surround display information with a decorative image to make the display information appear differently.

### [3-4] First and second display means

First and second display means are not limited to the examples according to the above embodiments. A rear display unit may have the same size as a front display unit. First and second display means may be two display means arranged at two of four surfaces of a folding display apparatus. Two display means may be arranged side by side, or face each other. In essence, first and second display means may be any display means that can display content and/or display information.

### [3-5] Selecting method

Selecting means 104 may select content in a different manner from those according to the above embodiments. For example, selecting means 104, in a case where each content is pre-assigned a priority, may select one or more content having a higher priority. A priority for each content may be determined based on how well known the content is (hereinafter, "awareness"). An awareness may be determined in proportion to a browsing frequency of content during a predetermined time period (for example, the past one year), or may be determined at the discretion of, for example, a provider of display apparatuses. For example, assuming a case where first display means 101 displays items of display information corresponding to content "X news," "Y newspaper," and "Z magazine," with the content "X news" having the highest priority, the content "Y newspaper" having the second highest priority, and the content "Z magazine" having the third highest priority, selecting means 104 selects the content "X news" as having the highest priority.

In general, a user is likely to have an interest in well-known content; accordingly, by determining a priority based on awareness, the second display means can display content that the user is likely to browse, as opposed to selecting content regardless of its priority. It is of note that a priority according to the present modification can be changed by a user. By enabling a user to assign a higher priority to content s/he is likely to be interested in, the second display means can display content the user is likely to browse.

### [3-6] Categories of the invention

The present invention may be embodied as a display method for realizing processing performed by a display apparatus. The processing herein refers to, for example, the display processing shown in Fig. 7 or a display processing employing a selecting method according to the second embodiment or the modification. The present invention may also be embodied as a program to be executed in a computer such as a display apparatus. The program may be provided to a computer via a recording medium such as an optical disk, or may be downloaded to the computer via a network such as the Internet, in which computer the program is installed to be used.

## Claims

1. A display apparatus, comprising:
a first display means;
a second display means;
an acquiring means that acquires relevant information relevant to content;
a selecting means that selects one or more content from among a plurality of content based on relevant information acquired by the acquiring means for each of the plurality of content, items of display information for displaying the plurality of content being displayed on the first display means; and
a display control means that causes the second display means to display the one or more content selected by the selecting means.

2. The display apparatus according to Claim 1, wherein:
the acquiring means acquires, for each of the plurality of content, as relevant information, information indicating an amount of processing performed relative to the content based on a user's operation; and
the selecting means selects one or more content based on the amounts of processing indicated in the acquired relevant information.

3. The display apparatus according to Claim 1 or 2, wherein:
the acquiring means acquires information indicating a user attribute as relevant information; and
the selecting means selects one or more content based on a relevance between the user attribute and each of the plurality of content.

4. The display apparatus according to any one of Claims 1 to 3, wherein:
the acquiring means acquires information indicating a location of the display apparatus or a current time as relevant information; and
the selecting means selects one or more content based on a relevance between the location or current time indicated in the relevant information and each of the plurality of content.

5. The display apparatus according to any one of Claims 1 to 4, wherein:
the acquiring means acquires as relevant information, information indicating a position on the first display means, a user's line of vision crossing the position; and
the selecting means selects one or more content corresponding to display information displayed at the position indicated in the acquired relevant information.

6. The display apparatus according to any one of Claims 1 to 5, wherein:
the acquiring means acquires as relevant information for each of the items of display information, information indicating a time, the display information being displayed on the first display means during the indicated time; and
the selecting means selects one or more content based on lengths of times indicated in the acquired relevant information.

7. The display apparatus according to any one of Claims 1 to 6, wherein the display control means causes the second display means to display a list of the one or more content selected by the selecting means, and causes the first display means to display a list image representing the list.

8. The display apparatus according to any one of Claims 1 to 7, wherein the display control means displays the selected one or more content in a manner or at a position, the manner or position corresponding to a priority determined based on relevant information for the one or more content.

9. The display apparatus according to any one of Claims 1 to 8, wherein the display control means causes the first display means to display display information corresponding to the one or more content displayed on the second display means, in a manner different to another item of display information.

10. A display method performed by a display apparatus including a first display means and a second display means, the display method comprising:
acquiring relevant information relevant to content;
selecting one or more content from among a plurality of content based on relevant information acquired at the acquiring step for each of the plurality of content, items of display information for displaying the plurality of content being displayed on the first display means; and
causing the second display means to display the one or more content selected at the selecting step.
